# EUROPEAN PATENT APPLICATION

(11) **EP 1 378 894 A2**
(43) Date of publication of application: **07.01.2004**
(21) Application number: 03014433.1
(22) Date of filing: 30.06.2003
(51) Int. Cl.: G11B 7/24

(54) **Optical recording medium and method for recording data in the same**

(30) Priority: 01.07.2002 JP 2002191613
(71) Applicant: TDK Corporation, Chuo-ku, Tokyo 103-8272 (JP)
(72) Inventor: Inoue, Hiroyasu, Chuo-ku, Tokyo 103-8272 (JP); Mishima, Koichi, Chuo-ku, Tokyo 103-8272 (JP); Aoshima, Masaki, Chuo-ku, Tokyo 103-8272 (JP)
(74) Representative: HOFFMANN - EITLE

(57) **Abstract**

An optical recording medium includes a substrate, two recording layers provided on the substrate and two dielectric layers each provided adjacent to one of the recording layers, the optical recording medium being constituted so that when it is irradiated with a laser beam having a wavelength λ via an objective lens having a numerical aperture NA satisfying λ / NA ≤ 640 nm from the side opposite from the substrate, a record mark whose reflection coefficient is different from those of other regions of the recording layers is formed in the recording layers and at least a part of a region(s) of the dielectric layers adjacent to the record mark is crystallized to form a crystallized region. According to the thus constituted optical recording medium, it is possible to reproduce a signal having excellent signal characteristics.

## Description

### BACKGROUND OF THE INVENTION

The present invention relates to an optical recording medium and a method for recording data in the optical recording medium and, particularly, to an optical recording medium capable of reproducing a signal having excellent signal characteristics and a method for recording data in the same so that a signal having excellent signal characteristics can be reproduced.

### DESCRIPTION OF THE PRIOR ART

Optical recording media such as the CD, DVD and the like have been widely used as recording media for recording digital data. These optical recording media can be roughly classified into optical recording media such as the CD-ROM and the DVD-ROM that do not enable writing and rewriting of data (ROM type optical recording media), optical recording media such as the CD-R and DVD-R that enable writing but not rewriting of data (write-once type optical recording media), and optical recording media such as the CD-RW and DVD-RW that enable rewriting of data (data rewritable type optical recording media).

As well known in the art, data are generally recorded in a ROM type optical recording medium using prepits formed in a substrate in the manufacturing process thereof, while in a data rewritable type optical recording medium a phase change material is generally used as the material of the recording layer and data are recorded utilizing changes in an optical characteristic caused by phase change of the phase change material.

On the other hand, in a write-once type optical recording medium, an organic dye such as a cyanine dye, phthalocyanine dye or azo dye is generally used as the material of the recording layer and data are recorded utilizing changes in an optical characteristic caused by chemical change of the organic dye, which change may be accompanied by physical deformation.

However, since an organic dye is degraded when exposed to sunlight or the like, it is difficult to improve long-time storage reliability in the case where an organic dye is used as the material of the recording layer. Therefore, it is desirable for improving long-time storage reliability of the write-once type optical recording medium to form the recording layer of a material other than an organic dye.

As disclosed in Japanese Patent Application Laid Open No. 62-204442, an optical recording material formed by laminating two recording layers is known as an example of an optical recording medium whose recording layer is formed of a material other than an organic dye.

In this optical recording medium, eutectic is formed of elements contained in the two recording layers when a laser beam is projected onto the optical recording medium, thereby forming a record mark and data are recorded therein as a difference between the optical property of the record mark and those of other regions.

However, since the difference between the optical property of the record mark consisting of the eutectic formed of the elements contained in the two recording layers and those of other regions is not so large, it is difficult to record data in the optical recording medium only by forming a record mark of eutectic of elements contained in the two recording layers so that a reproduced signal having a good C/N ratio can be obtained.

In particular, in a next-generation type optical recording medium that offers improved recording density and has an extremely high data transfer rate, since the diameter of the laser beam spot used to record and reproduce data is required to be reduced to a very small size and the difference between the optical property of the record mark and those of other regions is required to be sufficiently large, it is extremely difficult to reproduce a signal having a good C/N ratio only by forming a record mark of eutectic of elements contained in the two recording layers.

The same problem occurs in optical recording media other than the optical recording medium constituted so as to form a record mark of eutectic of elements contained in the two recording layers.

### SUMMARY OF THE INVENTION

It is therefore an object of the present invention to provide an optical recording medium capable of reproducing a signal having excellent signal characteristics.

It is another object of the present invention to provide a method for recording data in an optical recording medium so that a signal having excellent signal characteristics can be reproduced.

The inventors of the present invention vigorously pursued a study for accomplishing the above objects and, as a result, made the discovery that when an optical recording medium including a first recording layer containing Si as a primary component, a second recording layer containing Cu as a primary component and a dielectric layer provided adjacent to the first recording layer or the second recording layer was irradiated with a laser beam having a wavelength λ via an objective lens having a numerical aperture NA satisfying λ / NA ≤ 640 nm, Si contained in the first recording layer as a primary component and Cu contained in second recording layer as a primary component were mixed at a region irradiated with the laser beam, thereby forming a record mark whose reflection coefficient was different from those of other regions of the first recording layer and the second recording layer and a crystallized region whose reflection coefficient was different from those of other regions of the dielectric layer was formed at a region adjacent to the record mark, whereby the difference between the reflection coefficient of the region irradiated with the laser beam and those of other regions was increased as a whole, the C/N ratio of the reproduced signal could be improved and jitter of the reproduced signal could be lowered.

Therefore, the inventors of the present invention pursued a further study and, as a result, made the discovery that when an optical recording medium including a first recording layer containing one element selected from the group consisting of Ge, Sn, Mg, C, Al, Zn, In, Cu, Ti and Bi as a primary component, a second recording layer containing one element from the group consisting of Cu, Si, Al, Zn and Ag and different from the element contained in the first recording layer as a primary component and a dielectric layer provided adjacent to the first recording layer or the second recording layer is irradiated with a laser beam having a wavelength λ via an objective lens having a numerical aperture NA satisfying λ / NA ≤ 640 nm, the element contained in the first recording layer as a primary component and the element contained in the second recording layer as a primary component were mixed at a region irradiated with the laser beam, thereby forming a record mark whose reflection coefficient was different from those of other regions of the first recording layer and the second recording layer and a crystallized region whose reflection coefficient was different from those of other regions of the dielectric layer was formed at a region adjacent to the record mark, whereby the difference between the reflection coefficient of the region irradiated with the laser beam and those of other regions was increased as a whole, the C/N ratio of a reproduced signal could be improved and jitter of the reproduced signal could be lowered.

Furthermore, when the inventors of the present invention irradiated an optical recording medium including a single recording layer containing an inorganic element such as Sn, Ti or the like and a dielectric layer provided adjacent to the recording layer with a laser beam having a wavelength λ via an objective lens having a numerical aperture NA satisfying λ / NA ≤ 640 nm, they found that a crystallized region whose reflection coefficient was different from those of other regions of the dielectric layer was formed at a region irradiated with the laser beam, whereby the difference between the reflection coefficient of the region irradiated with the laser beam and those of other regions was increased as a whole, the C/N ratio of a reproduced signal could be improved and jitter of the reproduced signal could be lowered.

Therefore, the above and other objects of the present invention can be accomplished by an optical recording medium comprising a substrate, at least one recording layer provided on the substrate and at least one dielectric layer provided adjacent to the at least one recording layer, the optical recording medium being constituted so that when it is irradiated with a laser beam having a wavelength λ via an objective lens having a numerical aperture NA satisfying λ / NA ≤ 640 nm from the side opposite from the substrate, a record mark whose reflection coefficient is different from those of other regions of the at least one recording layer is formed in the at least one recording layer and at least a part of a region(s) of the at least one dielectric layer adjacent to the record mark is crystallized to form a crystallized region.

In the present invention, the record mark is a region whose reflection coefficient has been changed as a result of irradiation with a laser beam.

In a preferred aspect of the present invention, the at least one recording layer is constituted by a first recording layer containing one element selected from the group consisting of Si, Ge, Sn, Mg, C, Al, Zn, In, Cu, Ti and Bi as a primary component and a second recording layer provided in the vicinity of the first recording layer and containing one element selected from the group consisting of Cu, Si, Al, Zn and Ag and different from the element contained in the first recording layer as a primary component and when the laser beam is projected, the element contained in the first recording layer as a primary component and the element contained in the second recording layer as a primary component are mixed with each other, thereby forming a record mark.

In this specification, the statement that the first recording layer contains a certain element as a primary component means that the content of the element is maximum among the elements contained in the first recording layer, while the statement that the second recording layer contains a certain element as a primary component means that the content of the element is maximum among the elements contained in the second recording layer.

In this preferred aspect of the present invention, it is not absolutely necessary for the second recording layer to be in contact with the first recording layer and it is sufficient for the second recording layer to be so located in the vicinity of the first recording layer as to enable formation of a mixed region including the primary component element of the first recording layer and the primary component element of the second recording layer when the region is irradiated with a laser beam. Further, one or more other layers such as a dielectric layer may be interposed between the first recording layer and the second recording layer.

In a preferred aspect of the present invention, the second recording layer is formed to be in contact with the first recording layer.

In a preferred aspect of the present invention, the optical recording medium includes one or more recording layers containing the same element as a primary component as that contained in the first recording layer as a primary component or one or more recording layers containing the same element as a primary component as that contained in the second recording layer as a primary component.

Although the reason why a mixed region including the primary component element of the first recording layer and the primary component element of the second recording layer can be formed when irradiated with a laser beam is not altogether clear, it is reasonable to conclude that the primary component elements of the first and second recording layers are partially or totally fused or diffused, thereby forming a region where the primary component elements of the first and second recording layers mix.

In this manner, according to the preferred aspect of the present invention, when the optical recording medium is irradiated with a laser beam, since the element contained in the first recording layer as a primary component and the element contained in second recording layer as a primary component are mixed to each other, thereby forming a record mark whose reflection coefficient exhibiting with respect to a laser beam for reproducing data is different from those of other regions in the first recording layer and the second recording layer and at least a part of a region in contact with the record mark of the at least one dielectric layer is crystallized, thereby forming a crystallized region whose reflection coefficient exhibiting with respect to a laser beam for reproducing data is different from those of other regions in the at least one dielectric layer, the difference between the reflection coefficient exhibiting with respect to a laser beam for reproducing data of the region where the record mark is formed and those of other regions is considerably large and it is therefore possible to reproduce recorded data utilizing such large difference in the reflection coefficients, thereby obtaining a reproduced signal having an improved C/N ratio.

In a further preferred aspect of the present invention, a first dielectric layer is formed so as to be in contact with the first recording layer and a second dielectric layer is formed so as to be in contact with the second recording layer.

In a preferred aspect of the present invention, the first recording layer contains an element selected from the group consisting of Si, Ge and Sn as a primary component.

In a preferred aspect of the present invention, the second recording layer is added with an element selected from the group consisting of Cu, Al, Zn, Ag, Mg, Sn, Au, Ti and Pd and different from the element contained in the first recording layer as a primary component.

In a further preferred aspect of the present invention, the first recording layer contains an element selected from the group consisting of Si, Ge, Sn, Mg, In, Zn, Bi and Al as a primary component and the second recording layer contains Cu as a primary component.

In a further preferred aspect of the present invention, the first recording layer contains an element selected from the group consisting of Si, Ge, Sn, Mg and Al as a primary component.

In a further preferred aspect of the present invention, an element selected from the group consisting of Al, Si, Zn, Mg, Au, Sn, Ge, Ag, P, Cr, Fe and Ti is added to the second recording layer containing Cu as a primary component.

In the case where an element selected from the group consisting of Al, Si, Zn, Mg, Au, Sn, Ge, Ag, P, Cr, Fe and Ti is added to the second recording layer containing Cu as a primary component, it is possible to further decrease a noise level in a reproduced signal and improve a long term storage reliability and since the thermal conductivity of the second recording layer is decreased, heat generated by a laser beam in the first recording layer and the second recording layer can be effectively transmitted to the at least one dielectric layer, the crystallization of the at least one dielectric layer can be facilitated.

In a further preferred aspect of the present invention, an element selected from the group consisting of Al, Zn, Sn and Au is added to the second recording layer containing Cu as a primary component.

In another preferred aspect of the present invention, the first recording layer contains an element selected from the group consisting of Si, Ge, C, Sn, Zn and Cu as a primary component and the second recording layer contains Al as a primary component.

In a further preferred aspect of the present invention, an element selected from the group consisting of Mg, Au, Ti and Cu is added to the second recording layer containing Al as a primary component.

In the case where an element selected from the group consisting of Mg, Au, Ti and Cu is added to the second recording layer containing Al as a primary component, it is possible to further decrease a noise level in a reproduced signal and improve a long term storage reliability and since the thermal conductivity of the second recording layer is decreased, heat generated by a laser beam in the first recording layer and the second recording layer can be effectively transmitted to the at least one dielectric layer, the crystallization of the at least one dielectric layer can be facilitated.

In another preferred aspect of the present invention, the first recording layer contains an element selected from the group consisting of Si, Ge, C and Al as a primary component and the second recording layer contains Zn as a primary component.

In a further preferred aspect of the present invention, an element selected from the group consisting of Mg, Cu and Al is added to the second recording layer containing Zn as a primary component.

In the case where an element selected from the group consisting of Mg, Cu and Al is added to the second recording layer containing Zn as a primary component, it is possible to further decrease a noise level in a reproduced signal and improve a long term storage reliability and since the thermal conductivity of the second recording layer is decreased, heat generated by a laser beam in the first recording layer and the second recording layer can be effectively transmitted to the at least one dielectric layer, the crystallization of the at least one dielectric layer can be facilitated.

In another preferred aspect of the present invention, the first recording layer contains an element selected from the group consisting of Si, Ge and Sn as a primary component and the second recording layer contains Ag as a primary component.

In a further preferred aspect of the present invention, an element selected from the group consisting of Cu and Pd is added to the second recording layer containing Ag as a primary component.

In the case where an element selected from the group consisting of Cu and Pd is added to the second recording layer containing Ag as a primary component, it is possible to further decrease a noise level in a reproduced signal and improve a long term storage reliability and since the thermal conductivity of the second recording layer is decreased, heat generated by a laser beam in the first recording layer and the second recording layer can be effectively transmitted to the at least one dielectric layer, the crystallization of the at least one dielectric layer can be facilitated.

In a preferred aspect of the present invention, the first recording layer and the second recording layer are preferably formed so that a total thickness thereof is 2 nm to 40 nm, more preferably, 2 nm to 30 nm, most preferably, 2 nm to 15 nm.

In the present invention, a dielectric material for forming the at least one dielectric layer is not particularly limited insofar as it is transparent and can be crystallized when irradiated with a laser beam and the at least one dielectric layer can be formed of a dielectric material containing oxide, sulfide, nitride or a combination thereof, for example, as a primary component. It is preferable for the at least one dielectric layer to contain at least one dielectric material selected from the group consisting of Al₂O₃, AlN, ZnO, ZnS, GeN, GeCrN, CeO, SiO, SiO₂, SiN and SiC as a primary component and it is more preferable for the at least one dielectric layer to contain ZnS• SiO₂ as a primary component.

In a preferred aspect of the present invention, the optical recording medium further comprises a light transmission layer provided on a side opposite to the substrate with respect to the first recording layer and the second recording layer.

In a further preferred aspect of the present invention, the light transmission layer is formed so as to have a thickness of 10 µm to 300 µm.

In a further preferred aspect of the present invention, an optical recording medium further comprises a reflective layer provided between the substrate and the second dielectric layer.

According to this preferred aspect of the present invention, it is possible to increase the difference in reflection coefficient between a record mark and a blank region where no record mark is formed by a multiple interference effect, thereby obtaining a higher reproduced signal (C/N ratio).

The above and other objects of the present invention can be also accomplished by a method for recording data in an optical recording medium comprising the steps of irradiating an optical recording medium comprising a substrate, at least one recording layer provided on the substrate and at least one dielectric layer provided adjacent to at least one recording layer with a laser beam having a wavelength λ via an objective lens having a numerical aperture NA satisfying λ / NA ≤ 640 nm from the side opposite from the substrate, forming a record mark in the at least one recording layer and crystallizing at least a part of a region(s) of the at least one dielectric layer adjacent to the record mark, thereby forming a crystallized region in the at least one dielectric layer.

In a preferred aspect of the present invention, the method for optically recording data includes a step of projecting a laser beam having a wavelength of 450 nm or shorter onto the optical recording medium, thereby recording data in the first recording layer and the second recording layer.

In a preferred aspect of the present invention, the power of the laser beam is modulated in accordance with a single pulse pattern when a recording linear velocity is equal to or higher than a predetermined recording linear velocity.

According to this preferred aspect of the present invention, since the power of the laser beam is modulated in accordance with a single pulse pattern when a recording linear velocity is equal to or higher than a predetermined recording linear velocity, even in the case where a recording linear velocity is high, an amount of heat added to the first recording layer and the second recording layer from the laser beam becomes high. Therefore, since an amount of heat added to the at least one dielectric layer becomes high, a crystallize region can be formed in a desired manner at a region of the at least one dielectric layer adjacent to the record mark.

The above and other objects and features of the present invention will become apparent from the following description made with reference to the accompanying drawings.

### BRIEF DESCRIPTION OF THE DRAWINGS

Figure 1 is a schematic cross-sectional view showing the structure of an optical recording medium that is a preferred embodiment of the present invention.
Figure 2 (a) is a schematic enlarged cross-sectional view of the optical recording medium shown in Figure 1.
Figure 2 (b) is a schematic enlarged cross-sectional view showing an optical recording medium after data have been recorded therein.
Figure 3 is a diagram showing a waveform of a single pulse pattern.
Figure 4 is a diagram showing a waveform of a basic pulse train pattern wherein Figure (a) shows a basic pulse train pattern for recording a 2T signals in 1, 77 modulation code and Figure (b) shows a basic pulse train pattern for recording 3T signal to 8T signal in 1, 77 modulation code.
Figure 5 is a block diagram showing a data recording apparatus.

### DESCRIPTION OF THE PREFERRED EMBODIMENTS

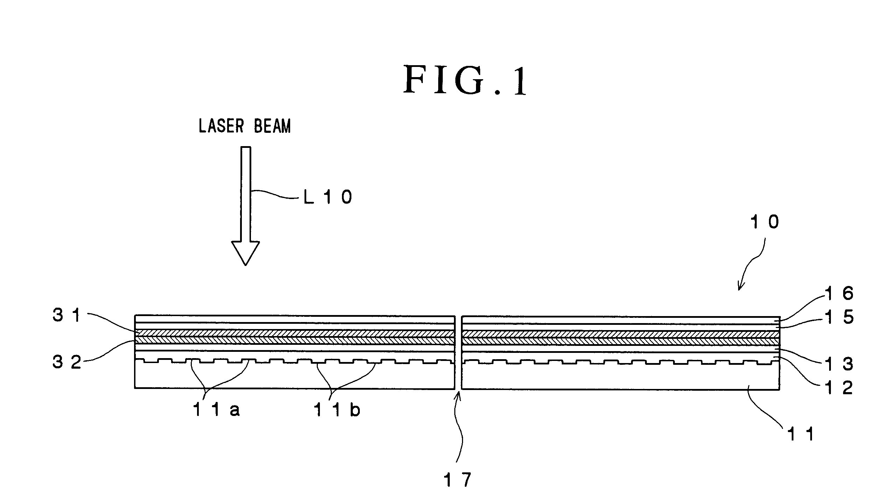

Figure 1 is a schematic cross-sectional view showing the structure of an optical recording medium that is a preferred embodiment of the present invention.

As shown in Figure 1, an optical recording medium 10 according to this embodiment is constituted as a write-once type optical recording medium and includes a substrate 11, a reflective layer 12 formed on the surface of the substrate 11, a second dielectric layer 13 formed on the surface of the reflective layer 12, a second recording layer 32 formed on the surface of the second dielectric layer 13, a first recording layer 31 formed on the surface of the second recording layer 32, a first dielectric layer 15 formed on the surface of the first recording layer 31 and a light transmission layer 16 formed on the surface of the first dielectric layer 15.

As shown in Figure 1, a center hole is formed at a center portion of the optical recording medium 10.

In this embodiment, as shown in Figure 1, a laser beam L10 is projected onto the surface of the light transmission layer 16, thereby recording data in the optical recording medium 10 or reproducing data from the optical recording medium 10.

The substrate 11 serves as a support for ensuring mechanical strength required for the optical recording medium 10.

The material used to form the substrate 11 is not particularly limited insofar as the substrate 11 can serve as the support of the optical recording medium 10. The substrate 11 can be formed of glass, ceramic, resin or the like. Among these, resin is preferably used for forming the substrate 11 since resin can be easily shaped. Illustrative examples of resins suitable for forming the substrate 11 include polycarbonate resin, acrylic resin, epoxy resin, polystyrene resin, polyethylene resin, polypropylene resin, silicone resin, fluoropolymers, acrylonitrile butadiene styrene resin, urethane resin and the like. Among these, polycarbonate resin is most preferably used for forming the substrate 11 from the viewpoint of easy processing, optical characteristics and the like.

In this embodiment, the substrate 11 has a thickness of about 1.1 mm.

The shape of the substrate 11 is not particularly limited but is normally disk-like, card-like or sheet-like.

As shown in Figure 1, grooves 11a and lands 11b are alternately formed on the surface of the substrate 11. The grooves 11a and/or lands 11b serve as a guide track for the laser beam L10 when data are to be recorded or when data are to be reproduced.

The reflective layer 12 serves to reflect the laser beam L10 entering through the light transmission layer 16 so as to emit it from the light transmission layer 16.

The thickness of the reflective layer 12 is not particularly limited but is preferably from 5 nm to 300 nm, more preferably from 20 nm to 200 nm.

The material used to form the reflective layer 12 is not particularly limited insofar as it can reflect a laser beam, and the reflective layer 12 can be formed of Mg, Al, Ti, Cr, Fe, Co, Ni, Cu, Zn, Ge, Ag, Pt, Au and the like. Among these materials, it is preferable to form the reflective layer 12 of a metal material having a high reflection characteristic, such as Al, Au, Ag, Cu or alloy containing at least one of these metals, such as alloy of Al and Ti.

The reflective layer 12 is provided in order to increase the difference in reflection coefficient between a recorded region and an unrecorded region by a multiple interference effect when the laser beam L10 is used to optically reproduce data from the first recording layer 31 and the second recording layer 32, thereby obtaining a higher reproduced signal (C/N ratio).

The first dielectric layer 15 and the second dielectric layer 13 serve to protect the first recording layer 31 and the second recording layer 32. Degradation of optically recorded data can be prevented over a long period by the first dielectric layer 15 and the second dielectric layer 13. Further, since the second dielectric layer 13 also serves to prevent the substrate 11 and the like from being deformed by heat, it is possible to effectively prevent jitter and the like from becoming worse due to the deformation of the substrate 11 and the like.

In this embodiment, the first dielectric layer 15 and the second dielectric layer 13 are formed of a material which can be crystallized when irradiated with the laser beam L10.

The dielectric material used to form the first dielectric layer 15 and the second dielectric layer 13 is not particularly limited insofar as it is transparent and can be crystallized when irradiated with the laser beam L10 and the first dielectric layer 15 and the second dielectric layer 13 can be formed of a dielectric material containing oxide, sulfide, nitride or a combination thereof, for example, as a primary component. More specifically, in order to prevent the substrate 11 and the like from being deformed by heat and thus protect the first recording layer 31 and the second recording layer 32, it is preferable for the first dielectric layer 15 and the second dielectric layer 13 to contain at least one dielectric material selected from the group consisting of Al₂O₃, AlN, ZnO, ZnS, GeN, GeCrN, CeO, SiO, SiO₂, SiN and SiC as a primary component and it is more preferable for the first dielectric layer 15 and the second dielectric layer 13 to contain ZnS· SiO₂ as a primary component.

The first dielectric layer 15 and the second dielectric layer 13 may be formed of the same dielectric material or of different dielectric materials. Moreover, at least one of the first dielectric layer 15 and the second dielectric layer 13 may have a multi-layered structure including a plurality of dielectric films.

In this specification, the statement that a dielectric layer contains a certain dielectric material as a primary component means that the dielectric material is maximum among dielectric materials contained in the dielectric layer. ZnS· SiO₂ means a mixture of ZnS and SiO₂.

The thickness of the first dielectric layer 15 and the second dielectric layer 13 is not particularly limited but is preferably from 3 nm to 200 nm. If the first dielectric layer 15 or the second dielectric layer 13 is thinner than 3 nm, it is difficult to obtain the above-described advantages. On the other hand, if the first dielectric layer 15 or the second dielectric layer 13 is thicker than 200 nm, it takes a long time to form the first dielectric layers 15 and the second dielectric layers 13, thereby lowering the productivity of the optical recording medium 10, and cracks may be generated in the optical recording medium 10 owing to stress present in the first dielectric layers 15 and/or the second dielectric layer 13.

The first recording layer 31 and the second recording layer 32 are adapted for recording data therein. In this embodiment, the first recording layer 31 is disposed on the side of the light transmission layer 16 and the second recording layer 32 is disposed on the side of the substrate 11.

In this embodiment, the first recording layer 31 contains an element selected from the group consisting of Si, Ge and Sn as a primary component and the second recording layer 32 contains Ag as a primary component.

Further, in this embodiment, an element selected from the group consisting of Cu and Pd is added to the second recording layer 32 containing Ag as a primary component.

In the case where an element selected from the group consisting of Cu and Pd is added to the second recording layer containing Ag as a primary component, it is possible to further decrease the noise level in the reproduced signal and improve the long term storage reliability. Moreover, since the thermal conductivity of the second recording layer 32 is decreased, heat generated by the laser beam in the first recording layer 31 and the second recording layer 32 can be effectively transmitted to the first dielectric layer 15 and the second dielectric layer 13. The crystallization of the first dielectric layer 15 and the second dielectric layer 13 is therefore facilitated.

The surface smoothness of the first recording layer 31 irradiated with the laser beam L10 becomes worse as the total thickness of the first recording layer 31 and the second recording layer 32 becomes thicker. As a result, the noise level of the reproduced signal becomes higher and the recording sensitivity is lowered. Further, the transfer efficiency of heat generated by a laser beam in the first recording layer 31 and the second recording layer 32 becomes lower as the total thickness of the first recording layer 31 and the second recording layer 32 becomes thicker. Therefore, it is preferable to form the total thickness of the first recording layer 31 and the second recording layer 32 thinner but in the case where the total thickness of the first recording layer 31 and the second recording layer 32 is too small, the change in reflection coefficient between before and after irradiation with the laser beam L10 is small, so that a reproduced signal having high strength (C/N ratio) cannot be obtained. Moreover, it becomes difficult to control the thickness of the first recording layer 31 and the second recording layer 32.

Therefore, in this embodiment, the first recording layer 31 and the second recording layer 32 are formed so that the total thickness thereof is from 2 nm to 40 nm. In order to obtain a reproduced signal having higher strength (C/N ratio) and further decrease the noise level of the reproduced signal, the total thickness of the first recording layer 31 and the second recording layer 32 is preferably from 2 nm to 30 nm and more preferably 2 nm to 15 nm.

The individual thicknesses of the first recording layer 31 and the second recording layer 32 are not particularly limited but in order to considerably improve the recording sensitivity and greatly increase the change in reflection coefficient between before and after irradiation with the laser beam L10, the thickness of the first recording layer 31 is preferably from 1 nm to 30 nm and the thickness of the second recording layer 32 is preferably from 1 nm to 30 nm. Further, it is preferable to define the ratio of the thickness of the first recording layer 31 to the thickness of the second recording layer 32 (thickness of first recording layer 31 / thickness of second recording layer 32) to be from 0.2 to 5.0.

The light transmission layer 16 serves to transmit a laser beam L10 and preferably has a thickness of 10 µm to 300 µm. More preferably, the light transmission layer 16 has a thickness of 50 µm to 150 µm.

The material used to form the light transmission layer 16 is not particularly limited but in the case where the light transmission layer 16 is to be formed by the spin coating process or the like, ultraviolet ray curable resin, electron beam curable resin or the like is preferably used. More preferably, the light transmission layer 16 is formed of ultraviolet ray curable resin.

The light transmission layer 16 may be formed by adhering a sheet made of light transmittable resin to the surface of the first dielectric layer 15 using an adhesive agent.

The optical recording medium 10 having the above-described configuration can, for example, be fabricated in the following manner.

The reflective layer 12 is first formed on the surface of the substrate 11 formed with the grooves 11a and lands 11b.

The reflective layer 12 can be formed by a gas phase growth process using chemical species containing elements for forming the reflective layer 12. Illustrative examples of the gas phase growth processes include vacuum deposition process, sputtering process and the like.

The second dielectric layer 13 is then formed on surface of the reflective layer 12.

The second dielectric layer 13 can be also formed by a gas phase growth process using chemical species containing elements for forming the second dielectric layer 13. Illustrative examples of the gas phase growth processes include vacuum deposition process, sputtering process and the like.

The second recording layer 32 is further formed on the second dielectric layer 13. The second recording layer 32 can be also formed by a gas phase growth process using chemical species containing elements for forming the second recording layer 32.

The first recording layer 31 is then formed on the second recording layer 32. The first recording layer 31 can be also formed by a gas phase growth process using chemical species containing elements for forming the first recording layer 31.

The first dielectric layer 15 is then formed on the first recording layer 31. The first dielectric layer 15 can be also formed by a gas phase growth process using chemical species containing elements for forming the first dielectric layer 15.

Finally, the light transmission layer 16 is formed on the first dielectric layer 15. The light transmission layer 16 can be formed, for example, by applying an acrylic ultraviolet ray curable resin or epoxy ultraviolet ray curable resin adjusted to an appropriate viscosity onto the surface of the second dielectric layer 15 by spin coating to form a coating layer and irradiating the coating layer with ultraviolet rays to cure the coating layer.

Thus, the optical recording medium 10 was fabricated.

Data are recorded in the optical recording medium 10 of the above-described configuration, in the following manner, for example.

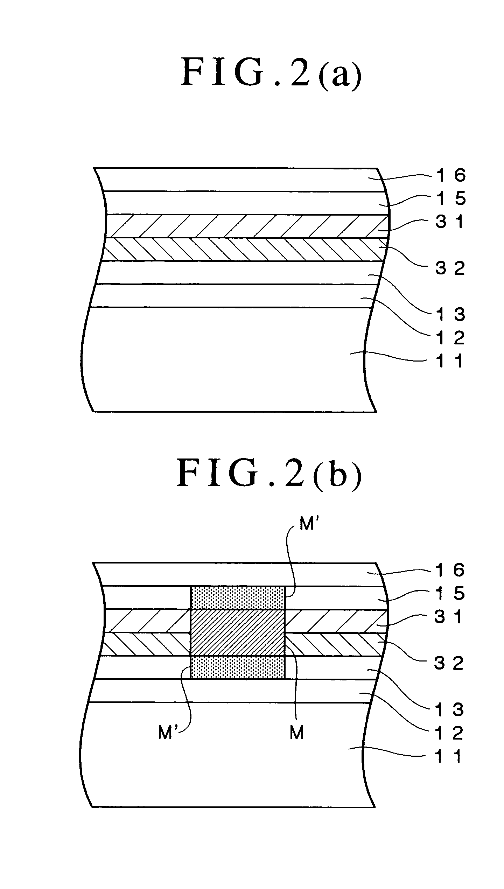

As shown in Figure 1 and 2(a), the first recording layer 31 and the second recording layer 32 are first irradiated via the light transmission layer 16 with a laser beam L10 having predetermined power.

In order to record data with high recording density, it is preferable to project a laser beam L10 having a wavelength λ of 450 nm or shorter onto the optical recording medium 10 via an objective lens (not shown) having a numerical aperture NA of 0.7 or more and it is more preferable that λ/NA be equal to or smaller than 640 nm.

In this embodiment, a laser beam L10 having a wavelength λ of 405 nm is projected onto the optical recording medium 10 via an objective lens having a numerical aperture NA of 0.85.

As shown in Figure 2(b), this results in formation at the region irradiated with the laser beam L10 of a record mark M composed of a mixture of the primary component element of the first recording layer 31 and the primary component element of the second recording layer 32, thereby recording data in the optical recording medium 10.

Further, in this embodiment, when the laser beam L10 is projected onto the optical recording medium 10 via the light transmission layer 16, dielectric materials contained in the first dielectric layer 15 and the second dielectric layer 13 are crystallized at a region irradiated with the laser beam L10 and, as shown in Figure 2(b), crystallized regions M' are formed in the first dielectric layer 15 and the second dielectric layer 13 so as to be adjacent to the record mark M.

In order to quickly mix the primary component element of the first recording layer 31 and the primary component element of the second recording layer 32, thereby forming the record mark M and quickly crystallize the dielectric materials contained in the first dielectric layer 15 and the second dielectric layer 13, thereby forming the crystallized regions M', it is preferable to set the power of the laser beam L10 to be equal to or higher than 1.5 mW at the surface of the light transmission layer 16.

Since the thus formed record mark M is composed of the mixture of the element contained in the first recording layer 31 as a primary component and the element contained in the second recording layer 32 as a primary component, the reflection coefficient of the record mark M is different from those of other regions of the first recording layer 31 and the second recording layer 32, and data recorded in the optical recording medium 10 can be reproduced utilizing the difference in the reflection coefficients between the record mark M and other regions of the first recording layer 31 and the second recording layer 32. However, in the case where the difference in the reflection coefficient between the record mark M and other regions of the first recording layer 31 and the second recording layer 32 is not sufficiently large, a reproduced signal having a high C/N ratio cannot be obtained.

However, in this embodiment, since regions of the first dielectric layer 15 and the second dielectric layer 13 adjacent to the record mark M are crystallized by heat imparted by the laser beam L10 and transferred from the first recording layer 31 and the second recording layer 32, whereby the crystallized regions M' is formed, the difference in reflection coefficients between the region where the record mark M and the crystallized regions M' are formed and other regions becomes large as a whole and it is possible to reproduce data recorded in the optical recording medium 10 utilizing the difference in reflection coefficients between the region where the record mark M and the crystallized regions M' are formed and other regions, thereby obtaining a reproduced signal having a high C/N ratio and reducing jitter of the reproduced signal.

When data are to be recorded in the optical recording medium 10 by projecting the laser beam L10 thereonto, the power of the laser beam L10 is modulated using a pulse train pattern including a recording power ***Pw*** and a ground power ***Pb.***

In this embodiment, data are recorded in the optical recording medium 10 by projecting the laser beam L10 thereonto to form record marks M and crystallized regions M', and data recorded in the optical recording medium 10 are reproduced utilizing the difference in reflection coefficients between the regions where the record marks M and crystallized regions M' are formed and other regions. The pulse train pattern is therefore selected in accordance with the data recording linear velocity and the thermal conductivity of the first recording layer 31 and the second recording layer 32 so that the crystallized regions M' can be formed in the first dielectric layer 15 and the second dielectric layer 13 in a desired manner.

More specifically, in the case where the recording linear velocity is high and the thermal conductivity of the first recording layer 31 and the second recording layer 32 is high, since the amount of heat imparted to the first dielectric layer 15 and the second dielectric layer 13 is small, the pulse train pattern for modulating the laser beam L10 is selected so that the amount of heat imparted to the first dielectric layer 15 and the second dielectric layer 13 becomes as large as possible. On the other hand, in the case where the recording linear velocity is low and the thermal conductivity of the first recording layer 31 and the second recording layer 32 is low, since the amount of heat imparted to the first dielectric layer 15 and the second dielectric layer 13 is large, the pulse train pattern for modulating the laser beam L10 is selected so that the amount of heat imparted to the first dielectric layer 15 and the second dielectric layer 13 is not so large.

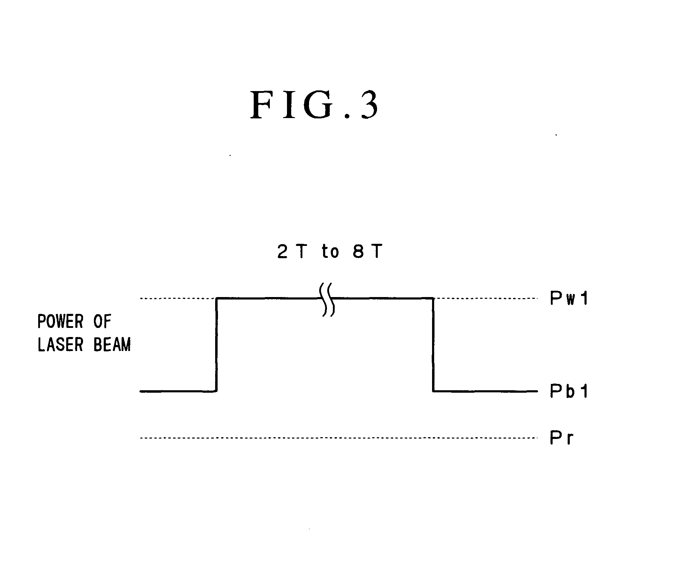

Figure 3 is a diagram showing the waveform of a single pulse pattern for the case where 2T signal to 8T signal are recorded in the (1, 7) RLL modulation mode.

The single pulse pattern shown in Figure 3 is one of a pulse train pattern preferably selected for modulating the power of a laser beam in the case where the recording linear velocity is high and the thermal conductivity of the first recording layer 31 and the second recording layer 32 is high.

As shown in Figure 3, in the single pulse pattern, the single pulse has a width corresponding to the length of a record mark M to be formed and the laser beam is set to have a recording power ***Pw1*** at the peak thereof and to have a ground power ***Pb1*** at other times.

The recording power ***Pw*1** is set to a high level at which the element contained in the first recording layer 31 as a primary component and the element contained in the second recording layer 32 as a primary component can be heated and mixed to form a record mark M and crystallized regions M' can be formed at regions of the first dielectric layer 15 and the second dielectric layer 13 adjacent to the record mark M when a laser beam having the recording power ***Pw1*** is projected onto the optical recording medium 10. On the other hand, the ground power ***Pb1*** is set to a low level at which the element contained in the first recording layer 31 as a primary component and the element contained in the second recording layer 32 as a primary component cannot be substantially mixed and no crystallized region M' can be formed in the first dielectric layer 15 and the second dielectric layer 13 when a laser beam having the ground power ***Pb1*** is projected onto the optical recording medium 10.

As shown in Figure 3, the ground power ***Pb1*** is set higher than the reproducing power *Pr.* When the ground power ***Pb1*** is set higher than the reproducing power Pr in this manner, the temperature of the track can be raised as a whole by the laser beam having the ground power ***Pb1*** and it is therefore possible to form a record mark M and crystallized regions M' without setting the level of the recording power ***Pw1*** so high.

Therefore, even in the case where the recording linear velocity is high and the thermal conductivity of the first recording layer 31 and the second recording layer 32 is high, it is possible to mix the element contained in the first recording layer 31 as a primary component and the element contained in the second recording layer 32 as a primary component, thereby forming a record mark M and to form crystallized regions M' at regions of the first dielectric layer 15 and the second dielectric layer 13 adjacent to the record mark M by modulating the power of the laser beam using the single pulse pattern shown in Figure 3.

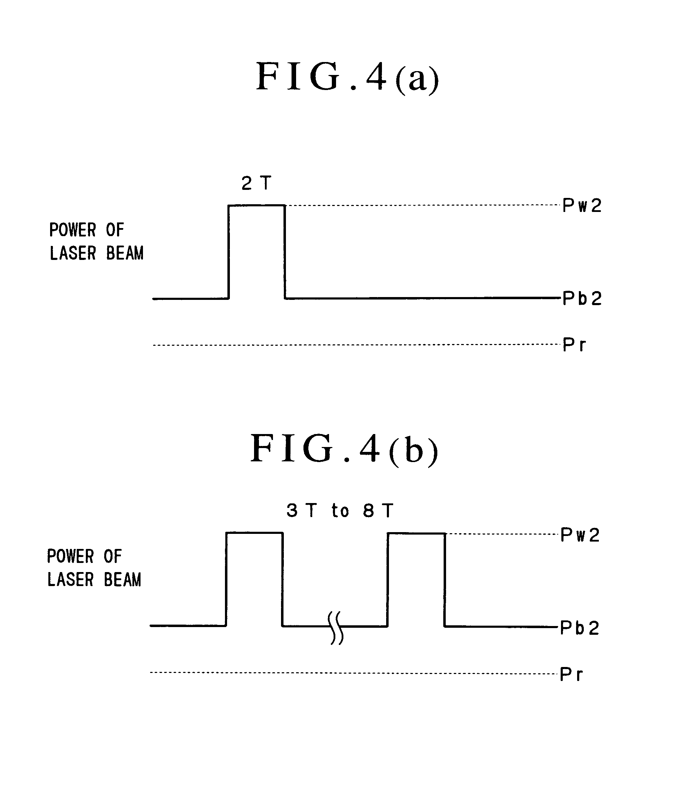

Figure 4 is a diagram showing the waveform of a basic pulse train pattern wherein Figure 4 (a) shows a pulse train pattern for recording a 2T signal in the (1, 7) RLL modulation mode and Figure 4 (b) shows a pulse train pattern for recording 3T signal to 8T signal.

The basic pulse train pattern shown in Figure 4 is a pulse train pattern preferably selected for modulating the power of the laser beam in the case where the recording linear velocity is low and the thermal conductivity of the first recording layer 31 and the second recording layer 32 is low.

As shown in Figure 4 (a) and Figure 4 (b), in the basic pulse train pattern, the pulse for forming a record mark M is divided into (n-1) pulses and the laser beam is set to have a recording power *Pw2* at the peak of each of the divided pulses and to have a ground power *Pb2* at other times.

In the case where the power of the laser beam is modulated using the basic pulse train pattern, even if the recording linear velocity is low, the amount of heat imparted to the first recording layer 31 and the second recording layer 32 can be prevented from becoming too large and it is therefore possible to effectively prevent the width of the record mark from becoming large and crosstalk from increasing.

The recording power ***Pw2*** is set to a high level at which the element contained in the first recording layer 31 as a primary component and the element contained in the second recording layer 32 as a primary component can be heated and mixed to form a record mark M and crystallized regions M' can be formed at regions of the first dielectric layer 15 and the second dielectric layer 13 adjacent to the record mark M when a laser beam having the recording power ***Pw2*** *is* projected onto the optical recording medium 10. On the other hand, the ground power ***Pb2*** is set to a low level at which the element contained in the first recording layer 31 as a primary component and the element contained in the second recording layer 32 as a primary component cannot be substantially mixed and no crystallized region M' can be formed in the first dielectric layer 15 and the second dielectric layer 13 when a laser beam having the ground power ***Pb2*** *is* projected onto the optical recording medium 10.

As shown in Figure 4(a) and Figure 4 (b), the ground power ***Ph2*** is set higher than the reproducing power ***Pr.*** When the ground power ***Pb2*** is set higher than the reproducing power Pr in this manner, the temperature of the track can be raised as a whole by the laser beam having the ground power ***Pb2*** and it is therefore possible to form a record mark M and crystallized regions M' without setting the level of the recording power ***Pw2*** so high.

Therefore, in the case where the recording linear velocity is low and the thermal conductivity of the first recording layer 31 and the second recording layer 32 is low, it is possible by modulating the power of a laser beam using the single pulse pattern shown in Figure 3 to mix the element contained in the first recording layer 31 as a primary component and the element contained in the second recording layer 32 as a primary component, thereby forming a record mark M and to form crystallized regions M' at regions of the first dielectric layer 15 and the second dielectric layer 13 adjacent to the record mark M, while crosstalk can be prevented from increasing.

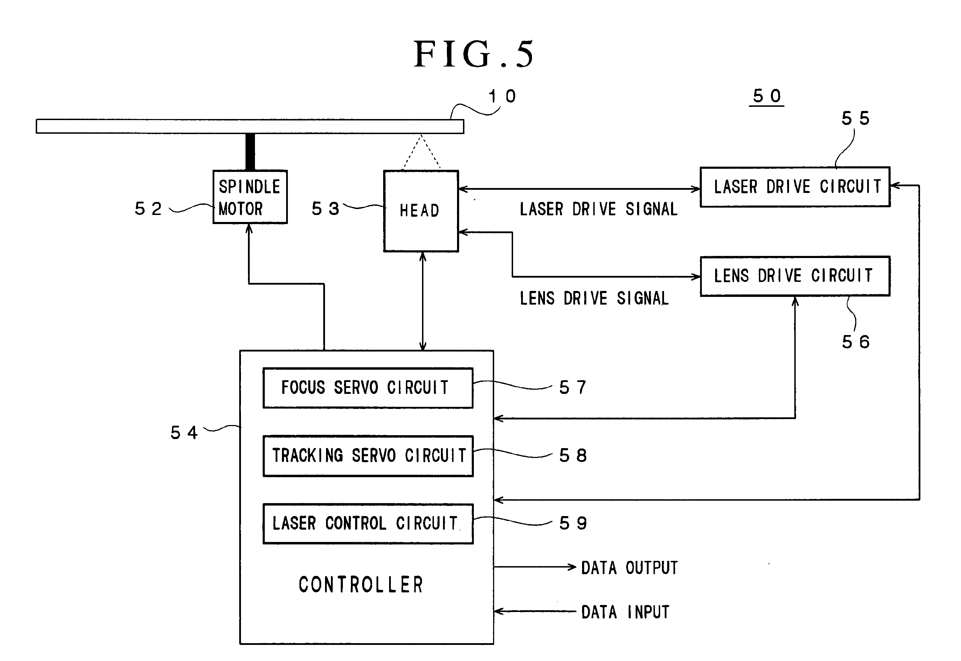

Figure 5 is a block diagram showing a data recording apparatus for recording data in the optical recording medium 10.

As shown in Figure 5, the data recording apparatus includes a spindle motor 52 for rotating the optical recording medium 10, a head 53 for projecting a laser beam L10 onto the optical recording medium 10 and receiving light reflected from the optical recording medium 10, a controller 54 for controlling the operations of the spindle motor 52 and the head 53, a laser drive circuit 55 for feeding a laser drive signal and a lens drive circuit 56 for feeding a lens drive signal to the head 53.

As shown in Figure 5, the controller 54 includes a focus servo circuit 57, a tracking servo circuit 58 and a laser control circuit 59.

When the focus servo circuit 57 is activated, a laser beam L10 is focused on the first recording layer 31 of the optical recording medium 10 being rotated and when the tracking servo circuit 58 is activated, the spot of the laser beam L10 automatically follows a track of the optical recording medium 10.

The focus servo circuit 57 and the tracking servo circuit 58 have automatic gain control capability for automatically regulating focus gain and automatic gain control capability for automatically regulating tracking gain, respectively.

The laser control circuit 59 generates the laser drive signal fed to the head 53 by the laser drive circuit 55.

In this embodiment, the optical recording medium 10 is prerecorded in the form of wobbles or pits with data for identifying the single pulse pattern or the basic pulse train pattern described above as data for setting the recording conditions and is also recorded with the recording linear velocity and other data for identifying recording conditions required to record data.

Therefore, prior to recording data in the optical recording medium 10, the laser control circuit 59 reads the data for setting recording conditions recorded in the optical recording medium 10, selects the single pulse pattern or the basic pulse train pattern based on the thus read data for setting recording conditions, generates a laser drive signal, and causes the laser drive circuit 55 to output the laser drive signal to the head 53.

In this manner, data are recorded in the optical recording medium 10 by the laser beam L10 modulated in accordance with the desired pulse train pattern.

According to the above described embodiment, when data are to be recorded in the optical recording medium 10 by projecting the laser beam L10 thereonto, since a record mark M is formed by mixing the element contained in the first recording layer 31 as a primary component and the element contained in second recording layer 32 as a primary component and crystallized regions M' are formed at a regions of the first dielectric layer 15 and the second dielectric layer 13 adjacent to the record mark M, the difference in reflection coefficients between the region where the record mark M and the crystallized regions M' are formed and other regions can be made large as a whole and it is possible reproduce data recorded in the optical recording medium 10 utilizing the difference in reflection coefficients between the region where the record mark M and the crystallized regions M' are formed and other regions, thereby obtaining a reproduced signal having a high C/N ratio and reducing jitter of the reproduced signal.

### WORKING EXAMPLES AND COMPARATIVE EXAMPLES

Hereinafter, working examples will be set out in order to further clarify the advantages of the present invention.

### Working Example 1

An optical recording medium sample # 1 having the same structure as that shown in Figure 1 was fabricated in the following manner.

A polycarbonate substrate having a thickness of 1.1 mm and a diameter of 120 mm was first set on a sputtering apparatus. Then, a reflective layer containing Ag as a primary component and having a thickness of 100 nm, a second dielectric layer containing a mixture of ZnS and SiO₂ and having a thickness of 28 nm, a second recording layer containing Cu as a primary component, added with 21 atomic % of Mg and having a thickness of 5 nm, a first recording layer containing Si as a primary component and having a thickness of 5 nm and a first dielectric layer containing the mixture of ZnS and SiO₂ and having a thickness of 22 nm were sequentially formed on the polycarbonate substrate using the sputtering process.

The mole ratio of ZnS to SiO₂ in the mixture of ZnS and SiO₂ contained in the first dielectric layer and the second dielectric layer was 80:20.

Further, the first dielectric layer was coated using the spin coating method with a resin solution prepared by dissolving acrylic ultraviolet ray curable resin in a solvent to form a coating layer and the coating layer was irradiated with ultraviolet rays, thereby curing the acrylic ultraviolet ray curable resin to form a light transmission layer having a thickness of 100 µm.

An optical recording medium sample # 2 was fabricated in the manner of the optical recording medium sample # 1, except that a second recording layer was formed by adding 17 atomic % of Al instead of Mg.

Each of the optical recording medium samples # 1 and # 2 was set in a DDU1000 optical recording medium evaluation apparatus manufactured by Pulstec Industrial Co., Ltd., a blue laser beam having a wavelength of 405 nm was employed as the laser beam for recording data and the laser beam was condensed onto each of the optical recording media via the light transmission layer using an objective lens whose numerical aperture was 0.85, and data were optically recorded therein under the following recording signal conditions.
Modulation Code: (1.7) RLL
Channel Bit Length: 0.12 µm
Recording Linear Velocity: 5.3 m/sec
Channel Clock: 66 MHz
Recording Signal: 8 T

The power of the laser beam was modulated using the basic pulse train pattern shown in Figure 4 so that the width of each pulse was set to be 0.5 T, the ground power ***Pb2*** was set to be 0.1 mW and the recording power ***Pw2*** was set to be 5.0 mW.

The data transfer rate was about 35 Mbps assuming that the format efficiency was 80 %.

Data recorded in each of the optical recording media were then reproduced using the optical recording medium evaluation apparatus mentioned above and the C/N ratio and clock jitter of the reproduced signal were measured. The fluctuation o of a reproduced signal was measured using a time interval analyzer and the clock jitter was calculated as σ/Tw, where Tw was one clock period.

The results of the measurement are shown in Table 1.

**Table 1**

| | C/N (dB) | jitter (%) |
|---|---|---|
| Optical Recording Medium Sample #1 | 58.7 | 8.5 |
| Optical Recording Medium Sample #2 | 58.3 | 8.8 |

As shown in Table 1, it was found that in each of the optical recording medium samples # 1 and # 2, a reproduced signal having an extremely high C/N ratio could be obtained and the clock jitter of the reproduced signal was very low.

Then, the first recording layer and the second recording layer in each of the optical recording medium samples # 1 and # 2 were observed using an Auger analysis apparatus and the first dielectric layer and the second dielectric layer thereof were observed using a transmission electron microscope.

It was observed in each of the optical recording medium samples # 1 and # 2 that materials of the first recording layer and the second recording layer were mixed at a region where the record mark was formed and that materials of the first recording layer and the second recording layer were not mixed in the blank region.

On the other hand, ZnS crystal was observed at regions of the first dielectric layer and the second dielectric layer adjacent to the record mark in each of the optical recording medium samples # 1 and # 2.

Therefore, it was confirmed that reproduced signals having excellent characteristics could be obtained in the optical recording medium samples # 1 and # 2 because the regions of the first dielectric layer and the second dielectric layer adjacent to the record mark were crystallized.

### Working Example 2

An optical recording medium sample # 3 was fabricated in the manner of the optical recording medium sample # 1, except that a second recording layer containing Al as the primary component and added with 17 atomic % of Mg was formed.

Similarly to the Working Example 1, data were recorded in the optical recording medium sample # 3, and the first recording layer, the second recording layer, the first dielectric layer and the second dielectric layer in the optical recording medium sample # 3 were observed.

It was observed in the optical recording medium sample # 3 that materials of the first recording layer and the second recording layer were mixed at a region where the record mark was formed and that materials of the first recording layer and the second recording layer were not mixed in the blank region.

Further, ZnS crystal was observed at regions of the first dielectric layer and the second dielectric layer adjacent to the record mark in the optical recording medium sample # 3.

Therefore, it was found that in the case where the second recording layer contained Al as a primary component, the same results were obtained as in the case where the second recording layer contained Cu as a primary component.

### Working Example 3

An optical recording medium sample # 4 was fabricated in the manner of the optical recording medium sample # 1, except that a second recording layer containing Cu as the primary component and added with 23 atomic % of Al and 12.8 atomic % of Au was formed.

Data were recorded in the optical recording medium sample # 4 using the optical recording medium evaluation apparatus used in the Working Example 1 and using a laser beam whose power was modulated in accordance with the single pulse pattern shown in Figure 3.

The ground power ***Pb1*** of the single pulse pattern was set to 0.1 mW and the recording power ***Pw*1** thereof was set to 3.8 mW.

The other recording conditions were the same as those used in the Working Example 1.

Similarly, data were recorded in the optical recording medium sample # 4 by modulating the power of the laser beam in accordance with the basic pulse train pattern shown in Figure 4.

The width of each pulse of the basic pulse train pattern was set to 0.3 T, the ground power ***Pb2*** thereof was set to 0.1 mW and the recording power ***Pw2*** thereof was set to 5.0 mW.

The results of the measurement are shown in Table 2.

**Table 2**

| | C/N (dB) | jitter (%) |
|---|---|---|
| Single Pulse Pattern | 62.7 | 8.0 |
| Basic Pulse Train Pattern | 61.8 | 8.7 |

As shown in Table 2, it was found that the C/N ratio of a reproduced signal was improved and the clock jitter was decreased in the case of using the single pulse pattern and modulating the power of the laser beam in comparison with the case of using the basic pulse train pattern and modulating the power of the laser beam.

Similarly to the Working Example 1, the first recording layer, the second recording layer, the first dielectric layer and the second dielectric layer of the optical recording medium sample # 4 were further observed in each of the case where data were recorded using the laser beam whose power was modulated in accordance with the single pulse pattern and the case where data were recorded using the laser beam whose power was modulated in accordance with the basic pulse train pattern.

It was observed in each case that materials of the first recording layer and the second recording layer were mixed at a region where the record mark was formed and that materials of the first recording layer and the second recording layer were not mixed in the blank region.

On the other hand, ZnS crystal was observed at regions of the first dielectric layer and the second dielectric layer adjacent to the record mark in the case where data were recorded using the laser beam whose power was modulated in accordance with the single pulse pattern but no crystal was observed at regions of the first dielectric layer and the second dielectric layer adjacent to the record mark in the case where data were recorded using the laser beam whose power was modulated in accordance with the basic pulse train pattern.

Therefore, it was confirmed that the difference in characteristics of the reproduced signals between the case where data were recorded using the laser beam whose power was modulated in accordance with the single pulse pattern and the case where data were recorded using the laser beam whose power was modulated in accordance with the basic pulse train pattern was caused by whether or not the regions of the first dielectric layer and the second dielectric layer adjacent to the record mark were crystallized.

It can be assumed that this was because an amount of heat imparted to the first recording layer and the second recording layer was larger and the temperature increase of the first dielectric layer and the second dielectric layer was greater in the case where data were recorded using the laser beam whose power was modulated in accordance with the single pulse pattern than that in the case where data were recorded using the laser beam whose power was modulated in accordance with the basic pulse train pattern.

### Working Example 4

An optical recording medium sample # 5 was fabricated in the following manner.

A polycarbonate substrate having a thickness of 1.1 mm and a diameter of 120 mm was first set on a sputtering apparatus. Then, a reflective layer containing Ag as a primary component and having a thickness of 100 nm, a second dielectric layer containing a mixture of ZnS and SiO₂ and having a thickness of 30 nm, a recording layer containing Sn as a primary component and having a thickness of 3 nm, and a first dielectric layer containing the mixture of ZnS and SiO₂ and having a thickness of 30 nm were sequentially formed on the polycarbonate substrate using the sputtering process.

The mole ratio of ZnS to SiO₂ in the mixture of ZnS and SiO₂ contained in the first dielectric layer and the second dielectric layer was 80:20.

Further, the first dielectric layer was coated using the spin coating method with a resin solution prepared by dissolving acrylic ultraviolet ray curable resin in a solvent to form a coating layer and the coating layer was irradiated with ultraviolet rays, thereby curing the acrylic ultraviolet ray curable resin to form a light transmission layer having a thickness of 100 µm.

Data were recorded in the optical recording medium sample # 5 using the optical recording medium evaluation apparatus used in the Working Example 1 and using a laser beam whose power was modulated in accordance with the basic pulse train pattern shown in Figure 4.

The width of each pulse of the basic pulse train pattern was set to 0.6 T, the ground power ***Pb2*** thereof was set to 0.1 mW and the recording power ***Pw2*** thereof was set to 9.0 mW.

The other recording conditions were the same as those used in the

### Working Example 1.

Similarly to the Working Example 1, the first dielectric layer and the second dielectric layer of the optical recording medium sample # 5 were observed.

ZnS crystal was observed at regions of the first dielectric layer and the second dielectric layer adjacent to a region of the recording layer irradiated with the laser beam having the recording power ***Pw2.***

### Working Example 5

An optical recording medium sample # 6 was fabricated in the following manner.

A polycarbonate substrate having a thickness of 1.1 mm and a diameter of 120 mm was first set on a sputtering apparatus. Then, a second dielectric layer containing a mixture of ZnS and SiO₂ and having a thickness of 100 nm, a recording layer containing Sn as a primary component and having a thickness of 3.5 nm, and a first dielectric layer containing the mixture of ZnS and SiO₂ and having a thickness of 80 nm were sequentially formed on the polycarbonate substrate using the sputtering process.

The mole ratio of ZnS to SiO₂ in the mixture of ZnS and SiO₂ contained in the first dielectric layer and the second dielectric layer was 80:20.

Further, the first dielectric layer was coated using the spin coating method with a resin solution prepared by dissolving acrylic ultraviolet ray curable resin in a solvent to form a coating layer and the coating layer was irradiated with ultraviolet rays, thereby curing the acrylic ultraviolet ray curable resin to form a light transmission layer having a thickness of 100 µm.

Data were recorded in the optical recording medium sample # 6 using the optical recording medium evaluation apparatus used in the Working Example 1 and using a laser beam whose power was modulated in accordance with the basic pulse train pattern shown in Figure 4.

The width of each pulse of the basic pulse train pattern was set to 0.6 T, the ground power ***Pb2*** thereof was set to 0.1 mW and the recording power ***Pw2*** thereof was set to 8.0 mW.

The other recording conditions were the same as those used in the Working Example 1.

Similarly to the Working Example 1, the first dielectric layer and the second dielectric layer of the optical recording medium sample # 6 were observed.

ZnS crystal was observed at regions of the first dielectric layer and the second dielectric layer adjacent to a region of the recording layer irradiated with the laser beam having the recording power ***Pw2.***

### Working Example 6

An optical recording medium sample # 7 was fabricated in the following manner.

A polycarbonate substrate having a thickness of 1.1 mm and a diameter of 120 mm was first set on a sputtering apparatus. Then, a dielectric layer containing a mixture of ZnS and SiO₂ and having a thickness of 60 nm and a recording layer containing Sn as a primary component and having a thickness of 6 nm were sequentially formed on the polycarbonate substrate using the sputtering process.

The mole ratio of ZnS to SiO₂ in the mixture of ZnS and SiOg contained in the dielectric layer was 80:20.

Further, the recording layer was coated using the spin coating method with a resin solution prepared by dissolving acrylic ultraviolet ray curable resin in a solvent to form a coating layer and the coating layer was irradiated with ultraviolet rays, thereby curing the acrylic ultraviolet ray curable resin to form a light transmission layer having a thickness of 100 µm.

Data were recorded in the optical recording medium sample # 7 using the optical recording medium evaluation apparatus used in the Working Example 1 and using a laser beam whose power was modulated in accordance with the basic pulse train pattern shown in Figure 4.

The width of each pulse of the basic pulse train pattern was set to 0.6 T, the ground power ***Pb2*** thereof was set to 0.1 mW and the recording power ***Pw2*** thereof was set to 7.0 mW.

The other recording conditions were the same as those used in the Working Example 1.

Similarly to the Working Example 1, the first dielectric layer and the second dielectric layer of the optical recording medium sample # 7 were observed.

ZnS crystal was observed at regions of the dielectric layer adjacent to a region of the recording layer irradiated with the laser beam having the recording power ***Pw2.***

### Working Example 7

An optical recording medium sample # 8 was fabricated in the following manner.

A polycarbonate substrate having a thickness of 1.1 mm and a diameter of 120 mm was first set on a sputtering apparatus. Then, a second dielectric layer containing a mixture of ZnS and SiO₂ and having a thickness of 20 nm, a recording layer containing Ti as a primary component and having a thickness of 10 nm, and a first dielectric layer containing the mixture of ZnS and SiO₂ and having a thickness of 20 nm were sequentially formed on the polycarbonate substrate using the sputtering process.

The mole ratio of ZnS to SiO₂ in the mixture of ZnS and SiO₂ contained in the first dielectric layer and the second dielectric layer was 80:20.

Further, the first dielectric layer was coated using the spin coating method with a resin solution prepared by dissolving acrylic ultraviolet ray curable resin in a solvent to form a coating layer and the coating layer was irradiated with ultraviolet rays, thereby curing the acrylic ultraviolet ray curable resin to form a light transmission layer having a thickness of 100 µm.

Data were recorded in the optical recording medium sample # 8 using the optical recording medium evaluation apparatus used in the Working Example 1 and using a laser beam whose power was modulated in accordance with the basic pulse train pattern shown in Figure 4.

The width of each pulse of the basic pulse train pattern was set to 0.6 T, the ground power ***Pb2*** thereof was set to 0.1 mW and the recording power ***Pw2*** thereof was set to 10.0 mW.

The other recording conditions were the same as those used in the Working Example 1.

Similarly to the Working Example 1, the first dielectric layer and the second dielectric layer of the optical recording medium sample # 8 were observed.

ZnS crystal was observed at regions of the first dielectric layer and the second dielectric layer adjacent to a region of the recording layer irradiated with the laser beam having the recording power ***Pw2.***

The present invention has thus been shown and described with reference to specific embodiments and working examples. However, it should be noted that the present invention is in no way limited to the details of the described arrangements but changes and modifications may be made without departing from the scope of the appended claims.

For example, in the above described embodiment, although the optical recording medium 10 is provided with the first recording layer 31 and the second recording layer 32, it is not absolutely necessary for the optical recording medium to be provided with two recording layers 31, 32 and the present invention can be widely applied also to an optical recording medium provided with a single recording layer.

Moreover, in the above described embodiment, although the first recording layer 31 and the second recording layer 32 are formed in contact with each other, it is not absolutely necessary to form the first recording layer 31 and the second recording layer 32 in contact with each other but it is sufficient for the second recording layer 32 to be so located in the vicinity of the first recording layer 31 as to enable formation of a mixed region including the primary component element of the first recording layer 31 and the primary component element of the second recording layer 32 when the region is irradiated with a laser beam. Further, one or more other layers such as a dielectric layer may be interposed between the first recording layer 31 and the second recording layer 32.

Furthermore, although the optical recording medium 10 in the above described embodiment includes the first recording layer 31 and the second recording layer 32, the optical recording medium may include one or more recording layers containing as a primary component, the element contained in the first recording layer 31 as a primary component or one or more recording layers containing as a primary component, the element contained in the second recording layer 32 as a primary element, in addition to the first recording layer 31 and the second recording layer 32.

Further, the optical recording medium 10 in the above described embodiment includes the first dielectric layer 15 and the second dielectric layer 13 and the first recording layer 31 and the second recording layer 32 are disposed between the first dielectric layer 15 and the second dielectric layer 13. However, it is not absolutely necessary for the optical recording medium 10 to include the first dielectric layer 15 and the second dielectric layer 13, the optical recording medium 10 may include a single dielectric layer and in such a case, the dielectric layer may be disposed on either the side of the substrate 11 or the side of the light transmission layer 16 with respect to the first recording layer 31 and the second recording layer 32.

Furthermore, in the above described working examples, although the first recording layer 31 and the second recording layer 32 are formed so as to have the same thickness in the above described embodiment and working examples, it is not absolutely necessary to form the first recording layer 31 and the second recording layer 32 so as to have the same thickness.

Moreover, in the above described embodiment, although the first recording layer 31 is disposed on the side of the light transmission layer 16 and the second recording layer 32 is disposed on the side of the substrate 11 in the above described embodiment and working examples, it is possible to dispose the first recording layer 31 on the side of the substrate 11 and the second recording layer 32 on the side of the light transmission layer 16.

Further, in the above described embodiment, although the crystallized regions M' are formed throughout the regions of the first dielectric layer 15 and the second dielectric layer 13 adjacent to the record mark M, it is not absolutely necessary for the crystallized regions M' to be formed throughout the regions of the first dielectric layer 15 and the second dielectric layer 13 adjacent to the record mark M and it is sufficient for the crystallized regions M' to be formed in at least a part of regions of the first dielectric layer 15 or the second dielectric layer 13 adjacent to the record mark M.

Furthermore, in the above described embodiment and the working examples, although the explanation was made as to the case of recording data in the next-generation optical recording medium from which it is harder to obtain a large output signal than in the case of the conventional optical recording medium and to which the present invention is most effectively applied, the present invention is not limited to the next-generation optical recording medium and can be widely applied to write-once type optical recording media.

According to the present invention, it is possible to provide an optical recording medium capable of reproducing a signal having excellent signal characteristics.

Further, according to the present invention, it is possible to provide a method for recording data in an optical recording medium so that a signal having excellent signal characteristics can be reproduced.

## Claims

1. An optical recording medium comprising a substrate, at least one recording layer provided on the substrate and at least one dielectric layer provided adjacent to the at least one recording layer, the optical recording medium being constituted so that when it is irradiated with a laser beam having a wavelength λ via an objective lens having a numerical aperture NA satisfying λ / NA ≤ 640 nm from the side opposite from the substrate, a record mark whose reflection coefficient is different from those of other regions of the at least one recording layer is formed in the at least one recording layer and at least a part of a region(s) of the at least one dielectric layer adjacent to the record mark is crystallized to form a crystallized region.

2. An optical recording medium in accordance with Claim 1, wherein the at least one recording layer is constituted by a first recording layer containing one element selected from the group consisting of Si, Ge, Sn, Mg, C, Al, Zn, In, Cu, Ti and Bi as a primary component and a second recording layer provided in the vicinity of the first recording layer and containing one element selected from the group consisting of Cu, Si, Al, Zn and Ag and different from the element contained in the first recording layer as a primary component and when the laser beam is projected, the element contained in the first recording layer as a primary component and the element contained in the second recording layer as a primary component are mixed with each other, thereby forming a record mark.

3. An optical recording medium in accordance with Claim 2, wherein the second recording layer is formed to be in contact with the first recording layer.

4. An optical recording medium in accordance with Claim 2 or 3, wherein a first dielectric layer is formed so as to be in contact with the first recording layer and a second dielectric layer is formed so as to be in contact with the second recording layer.

5. An optical recording medium in accordance with any one of Claims 2 to 4, wherein the first recording layer contains an element selected from the group consisting of Si, Ge and Sn as a primary component.

6. An optical recording medium in accordance with any one of Claims 2 to 5, wherein the second recording layer is added with an element selected from the group consisting of Cu, Al, Zn, Ag, Mg, Sn, Au, Ti and Pd and different from the element contained in the first recording layer as a primary component.

7. An optical recording medium in accordance with any one of Claims 2 to 6, which further comprises a light transmission layer provided on a side opposite to the substrate with respect to the first recording layer and the second recording layer.

8. A method for recording data in an optical recording medium comprising steps of irradiating an optical recording medium comprising a substrate, at least one recording layer provided on the substrate and at least one dielectric layer provided adjacent to at least one recording layer with a laser beam having a wavelength λ via an objective lens having a numerical aperture NA satisfying λ / NA ≤ 640 nm from the side opposite from the substrate, forming a record mark in the at least one recording layer and crystallizing at least a part of a region(s) of the at least one dielectric layer adjacent to the record mark, thereby forming a crystallized region in the at least one dielectric layer.

9. A method for optically recording data in accordance with Claim 8, which comprises steps of projecting the laser beam onto the optical recording medium in which the at least one recording layer is constituted by a first recording layer containing one element selected from the group consisting of Si, Ge, Sn, Mg, C, Al, Zn, In, Cu, Ti and Bi as a primary component and a second recording layer provided in the vicinity of the first recording layer and containing one element selected from the group consisting of Cu, Si, Al, Zn and Ag and different from the element contained in the first recording layer as a primary component and mixing the element contained in the first recording layer as a primary component and the element contained in the second recording layer as a primary component with each other, thereby forming a record mark.

10. A method for optically recording data in accordance with Claim 9, wherein the second recording layer of the optical recording medium is formed to be in contact with the first recording layer thereof.

11. A method for optically recording data in accordance with Claim 9 or 10, wherein the optical recording medium further comprises a first dielectric layer formed so as to be in contact with the first recording layer and a second dielectric layer formed so as to be in contact with the second recording layer.

12. A method for optically recording data in accordance with any one of Claims 8 to 11, which further comprises a step of recording data in the optical recording medium by modulating power of the laser beam in accordance with a single pulse pattern when a recording linear velocity is equal to or higher than a predetermined recording linear velocity.
